(19) **Europäisches Patentamt**
**European Patent Office**
**Office européen des brevets**

(11) **EP 4 227 505 B1**

(12) **EUROPEAN PATENT SPECIFICATION**

(45) Date of publication and mention
of the grant of the patent:
**21.01.2026 Bulletin 2026/04**

(21) Application number: **22156018.8**

(22) Date of filing: **10.02.2022**

(51) International Patent Classification (IPC):
**F02B 19/10** (2006.01)     **F02D 19/10** (2006.01)
**F02D 35/02** (2006.01)     **F02P 5/152** (2006.01)
**F02B 25/04** (2006.01)     **F02M 26/06** (2016.01)
**F02D 41/14** (2006.01)     **F02D 41/00** (2006.01)

(52) Cooperative Patent Classification (CPC):
**F02D 19/10; F02D 35/023; F02D 35/027;**
**F02D 41/005; F02D 41/1406; F02M 26/06;**
**F02P 5/1522;** F02B 25/04; F02D 37/02;
F02D 41/40; Y02T 10/30

(54) **INTERNAL COMBUSTION ENGINE AND METHOD FOR OPERATING**

VERBRENNUNGSMOTOR UND VERFAHREN ZUM BETRIEB

MOTEUR À COMBUSTION INTERNE ET PROCÉDÉ DE FONCTIONNEMENT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**16.08.2023 Bulletin 2023/33**

(73) Proprietor: **WinGD Ltd.**
**8400 Winterthur (CH)**

(72) Inventors:
• **Unfug, Fridolin**
**8408 Winterthur (CH)**
• **Ferretti, Martino**
**8057 Zürich (CH)**

(74) Representative: **Hepp Wenger Ryffel AG**
**Friedtalweg 5**
**9500 Wil (CH)**

(56) References cited:
**US-A1- 2017 074 184**

• BARES P ET AL: "A new knock event definition
for knock detection and control optimization",
APPLIED THERMAL ENGINEERING,
PERGAMON, OXFORD, GB, vol. 131, 22
December 2017 (2017-12-22), pages 80 - 88,
XP085330912, ISSN: 1359-4311, DOI: 10.1016/
J.APPLTHERMALENG.2017.11.138

**Description**

The present invention relates to an internal combustion engine and to a method for operating an internal combustion engine.

The present invention preferably relates to an internal combustion engine like a large marine or ship engine or a stationary engine whose cylinders have an inner diameter of at least 200 mm. The engine preferably is a two-stroke engine or a two-stroke cross head engine.

The engine can be a diesel or gas engine, a dual fuel or a multi fuel engine. Burning of gaseous fuel or of liquid and/or gaseous fuels in such engines is possible as well as self-igniting or forced igniting.

US2017/074184 A1 discloses an internal combustion engine with EGR and a prechamber ignition.

BARES P ET AL ("A new knock event definition for knock detection and control optimization", APPLIED THERMAL ENGINEERING. PERGAMON. OXFORD. GB. vol. 131,22 December 2017 (2017-12-22), pages 80-88, XP085330912, ISSN: 1359-4311, DOI: 10.1016/J.APPLTHERMALENG.2017.11.138) disclose a new knock event definition for knock detection and control optimization.

The term internal combustion engine refers to large engines which can be operated not only in diesel mode, which is characterized by the self-ignition of the fuel, but also in Otto mode, which is characterized by the positive ignition of the fuel, or in mixtures of the two, for example by a spark ignition. Furthermore, the term internal combustion engine includes in particular dual-fuel engines and large engines in which the self-ignition of the fuel is used for the positive ignition of another fuel.

The engine has at least one cylinder having a piston therein. The piston is connected to a crankshaft. The piston reciprocates between a top dead center (TDC) and a bottom dead center (BDC) during operation of the engine. The cylinder typically has at least one air passage opening for intake, the air inlet in particular arranged in the liner of the cylinder, and at least one air passage opening for exhaust, the exhaust outlet in particular arranged in the cover of the cylinder. Preferably, the air inlet is in fluid connection with a scavenging air receiver.

The internal combustion engine can be a longitudinally flushed two-stroke engine.

Engine speed is preferably below 800 RPM (4-stroke) and more preferably below 200 RPM (2-stroke) which indicates the designation of low speed engines.

Fuel can be diesel or marine diesel oils or heavy fuel oils or emulsions or slurries or methanol or ethanol as well as gases like liquid natural gas (LNG), liquid petrol gas (LPG) and so on.

Further possible fuels which might be added on request are: LBG (Liquified Biogas), biological Fuels (e. g. Algae fuel or Seaweed Oil), hydrogen, synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines. In case of liquid fuel, like heavy fuel oil, marine 15 diesel oil, diesel or other liquids, as well as in case of gaseous fuels, like LNG, LPG or others, being burned by the engine, the exhaust from this combustion process needs to be cleaned to comply with the existing rules such as IMO Tier III.

Within this application the internal combustion engine preferably may be operated in a gas mode. Fluid fuel, such as a gas fuel or a pressurized gas, that is a liquid which vaporizes in the cylinder, is provided by gas admission valves and is used for torque-generating. In the gas mode, additionally, a small amount of a liquid fuel, sometimes referred to as pilot injection, may be injected to carry out an induced ignition.

The internal combustion engine typically comprises a turbocharger, which increases the amount of air supplied to the cylinder using the exhaust gas discharged from the cylinder. The air compressed by the turbocharger can be supplied to the scavenging receiver which is in fluid connection to the air passage opening for intake.

Besides fresh air and fluid fuel an inert gas, such as exhaust gas, may be introduced into the cylinder. The engine may comprise a high-pressure or a low-pressure exhaust gas recirculation path. For the low pressure exhaust gas recirculation the exhaust gas passes the turbine of the turbocharger before it is mixed to the fresh air and/or passes the compressor of the turbocharger and enters the cylinder as part of the scavenging air.

Abnormal combustion processes, such as pre-ignition, knocking or misfiring, occur in particular when the ratio of fresh air to gas, i.e. the air-to-fuel ratio or air-fuel equivalence ratio, also called Lambda, is not within a certain range.

If the gas content is too high, the air-fuel mixture becomes too rich. The combustion of the mixture takes place too fast or too early, for example by self-ignition, which can lead to pre-ignition or to knocking of the engine. If the air content is too high, the air-fuel mixture is too lean and undesired late combustion or even misfiring can occur, which of course also has a negative effect on the efficient and low-pollution operation of the engine. In particular, these two states of too high gas content and too high air content are designated as abnormal combustion processes. Thus, in the gas mode one strives for a combustion process without self-ignition of the air-gas mixture. The combustion process shall take place between the limits where the air-gas mixture is neither too rich nor too lean.

It is known, that inert gas, such as exhaust gas, can be introduced into the cylinder in order to reduce or to avoid abnormal combustion processes such as knocking.

It is an object of the present invention to avoid the drawbacks of the prior art and in particular to provide an internal combustion engine and a method of operating an internal combustion engine which allow to prevent knocking while providing for an optimal fuel efficiency.

In order to achieve the above object, the present invention provides an internal combustion engine according to the features defined in independent claim 1 and independent claim 2.

The present invention furthermore provides a method for operating an internal combustion engine according to the features defined in independent method claim 8 and independent method claim 9.

Further preferred embodiments are defined in the dependent claims.

According to the invention the internal combustion engine is a large vessel engine or a stationary engine which is operable at least in a gas mode.

To be operable in a gas mode means that either a fuel gas is admitted into the cylinder or a high pressurized fuel liquid is admitted to the cylinder which immediately vaporizes when entering the cylinder. The internal combustion engine comprises at least one gas admission valve for supplying fuel to the cylinder. Each cylinder may comprise a fuel fluid admission valve. Fuel fluid may be supplied to the fuel fluid admission valve for example from an LNG tank.

The internal combustion engine comprises at least one cylinder having an inner diameter of at least 200 mm. The cylinder comprises a pre-chamber, for example with a pilot ignition system or a spark ignition system.

The internal combustion engine further comprises an exhaust gas recirculation path. Preferably the exhaust recirculation path is a low pressure exhaust recirculation path. In particular the internal combustion engine comprises a turbocharger, which is arranged, such that at least a part of the exhaust gas passes the turbine of the turbocharger and is recirculated to the compressor of the turbocharger, such that recirculated exhaust gas is supplied to the cylinder together with fresh air.

In particular the internal combustion engine comprises a scavenge air receiver from which fresh air and recirculated exhaust gas may be guided to openings arranged in the lower part of the cylinder.

The internal combustion engine further comprises a pressure measuring unit with at least one sensor for providing a signal that is representative of a pressure within at least one cylinder. Preferably the pressure measuring unit comprises at least one sensor for each cylinder. The sensor may be a pressure sensor.

The internal combustion engine further comprises a control unit which is configured to receive a signal of the pressure measuring unit, in particular all signals of all cylinders. The control unit is further configured to determine a knock index on basis of the signal, in particular a knock index for each of the cylinders.

The control unit is further configured to compare the knock index with a predetermined knock index value or a predetermined knock index interval. The knock index value and/or the knock index interval can be predetermined on basis of for example the dimensions of the cylinder, of the natural frequencies of the cylinder and/or on basis of experience values specified in shop tests.

The control unit is further configured to adapt the exhaust gas recirculation rate (EGR rate), the time of an ignition event, for example the time of a pilot ignition or the time of a pilot fuel injection, and/or the amount of supplied fluid fuel, if the determined knock index is below or above a knock index value or the knock index interval.

The control unit may be configured to determine the knock index by determining the MAPO-value and/or the IMPO-value.

Typically the raw pressure signal is transferred to a band pass filtered pressure signal, for example in a band pass between 0.2 to 20 kHz. Preferably, a band pass filtering window of 0.5 kHz to 10 kHz can be applied.

The band pass filter may be part of the pressure measuring unit or may be part of the control unit.

From this band passed filtered signal the absolute value may be determined.

The MAPO-value is the maximum amplitude of pressure oscillations and is determined by the following formula:

$$\mathrm{MAPO} = \max(\left|\hat{p}\right|_{\theta_0}^{\theta_0 + \zeta})$$

The IMPO-value is the integral of the modules of pressure oscillation is determined by the following formula:

$$\mathrm{IMPO} = \frac{1}{N} \sum_{1}^{N} \int_{\theta_0}^{\theta_0 + \zeta} \left|\hat{p}\right| d\theta$$

where: $\hat{p}$ - filtered in-cylinder pressure, N - number of computed cycles, $\theta_0$ - crank angle corresponding to the beginning of the window of calculation, $\zeta$ - value of the window of calculation.

The knock index may also be determined by calculating the integral of modulus of pressure oscillations (IMPG), the rate of Heat release (ROHR) or the net cumulative heat release ($CHR_{NET}$). It is known, that recirculation of exhaust gas reduces knocking. However, combustion may be less effective with more exhaust gas. Thus, the lowest possible exhaust gas rate should be used by which knocking is prevented.

The internal combustion engine comprises a plurality of n cylinders, wherein n is larger than 1, and the pressure measuring unit provides signals that are representative for the pressure within each of the cylinders.

The control unit is configured to perform an adjustment procedure wherein the control unit is configured to set a first EGR rate. The EGR rate is a parameter which typically is common for all the cylinders which are supplied by one common turbocharger. The first setting may be taken from a map, for example predetermined in a shop test.

The EGR rate is reduced by a first EGR rate step, and the knock index for each of the cylinders may be determined.

If the determined knock index is below or above the knock index value or a knock index interval for at least one cylinder, the control unit is configured to adjust the ignition time, for example the time of the pilot fuel injection or the spark ignition time, for the respective cylinder.

If more than n-2 or n/2 cylinders have been adjusted, the EGR rate has to be kept constant.

Otherwise the EGR rate may be reduced again and the knock index is again determined for each of the cylinders and the individual cylinders may be adjusted by adjusting the ignition time.

This procedure can be repeated until the EGR rate has to be kept constant.

Alternatively, an EGR rate is set following a predefined set point. The control unit is configured to determine the knock index for each of the cylinders. If the knock index is above the knock index value or the knock index interval for at least one cylinder, the control unit is configured to adjust the ignition time for the respective cylinder. The control unit is configured to increase the EGR rate, if at least a predetermined number of all n cylinders, for example n-2 cylinders or n/2 cylinders, provide a signal above the knock index value or a knock index interval.

After that the knock index may be calculated for each of the cylinders. The control unit may restart monitoring the knock index after each round of adaptation.

The monitoring of the knock index may run continuously, such that ignition timing and EGR rate may be adapted following the above described procedure.

This way, changes in the global EGR rate can be avoided if only a few units, for example less than or equal n-2 or n/2 cylinders, have knocking according to the defined criteria..

The ignition time may be adjusted by causing an ignition at a later point of time, for example by causing an ignition one to two degrees after the crank angle of the previous ignition event.

The control unit may be configured to perform the adjustment procedure as described above continuously after a specific time interval, in particular of one to ten cycles, more particularly every five to ten cycles of engine operation.

Within this application the term "cycle" relates to the duration of one revolution of the crank shaft, during which cylinder scavenging, compression, heat release/combustion, an expansion/working stroke occurs.

In the preferred embodiment of the invention, the internal combustion engine comprises a control unit which is configured to differentiate between an oscillating pressure wave due to an ignition event and an oscillating pressure wave due to a knocking event, in particular before determining the knocking index.

The control unit may be configured to identify and to compare oscillations in a first crank angle range ($CR_I$) close to the crank angle of the ignition event and oscillations in a second crank angle range ($CR_{II}$) close to the crank angle of the maximum of the pressure course of a cycle.

A pressure oscillation in the combustion chamber caused by the ignition process usually is present already a short time after the ignition event, for example caused by a pilot ignition or a pilot fuel injection.

This oscillation can be detected within the first crank angle range close to the ignition event. The first crank angle range may cover a crank angle interval starting at a first crank angle distance from the crank angle of the ignition event and ending at a second crank angle distance from the crank angle of the ignition event, wherein the second crank angle distance is larger than the first crank angle distance

The first crank angle distance may be 2°, the second crank angle distance 4°.

The first crank angle range $CR_I$ may be defined by

$$CR_I = \{\theta_{ignition} + \theta_1 \ ; \ \theta_{ignition} + \theta_2\},$$

wherein $\theta_{ignition}$ is the crank angle of the ignition event, e.g. caused by injection of pilot fuel, $\theta_1$ is a first crank angle distance, $\theta_2$ is a second crank angle distance larger than the first angle distance. The first crank angle distance $\theta_1$ and the second crank angle distance $\theta_2$ are variables that need to be set in the control system. $\theta_{ignition} + \theta_1$ may typically be about 1° to 2 °CA after the crank angle of a pilot fuel injection $\theta_{PIT}$. $\theta_{ignition} + \theta_2$ may typically be about 4° to 6 °CA after the crank angle of a pilot fuel injection $\theta_{PIT}$.

Oscillations caused by a knock event typically are present in a later phase of the combustion process, typically within a second crank angle range around the crank angle of the maximum cylinder pressure. The second crank angle range may for example cover a crank angle interval starting at about the crank angle of the maximum cylinder pressure minus 5° crank angle and last until the crank angle of the maximum cylinder pressure plus 10° crank angle.

The second crank angle range $CR_{II}$ may be defined by

$$CR_{II} = \{\Theta_{pmax} + \Theta_3 \; ; \; \Theta_{pmax} + \Theta_4\},$$

wherein $\theta_{pmax}$ is the crank angle of the maximum cylinder pressure, $\theta_3$ is a third crank angle distance, $\theta_4$ is a fourth crank angle distance. The third crank angle distance $\theta_3$ and the fourth crank angle distance $\theta_4$ are variables that need to be set in the control system. $\theta_3$ is typically about-10°CA to -5 °CA. $\theta_4$ is typically about +5°CA to +10 °CA.

According to a possible rule, in case the pressure oscillation in the second crank angle range $CR_{II}$ does not exceed a factor x times the pressure oscillation in the first interval $CR_I$ the pressure oscillation is not counted as knocking.

The factor x is a variable that needs to be set in the control system. Typically x is about 1.5 to 2.5.

The pressure oscillation can be given by the maximum pressure oscillation amplitude of the band pass filtered pressure signal within the respective interval.

Alternatively, the pressure oscillation can be quantified by e.g. MAPO or IMPO values within the respective interval, or any other suitable method.

Before or after generating a filtered pressure signal, the control unit may check if the pressure signal is assessed as a knocking event. The control unit may take into account only the second crank angle range $CR_{II}$ of the pressure course for determining the knock index.

For large engines, the sampling rate can be chosen such that the computational effort is not too high, since the frequency of the oscillations is smaller than for small engines. Typically, a sampling rate of 1000Hz-5000Hz, in particular a sampling rate of 1000-2500Hz, can be chosen.

Knock frequencies which typically contribute most to the amplitude of the pressure oscillation are the first tangential mode, the second tangential mode and the first radial mode. Typical knock frequencies $f_{knock}$ for these modes in 2-stroke large bore engines are in the range of 500Hz to 2500Hz. Thus, a sampling rate of 5000Hz is able to measure the first tangential mode, the second tangential modes and the first radial mode, since the sampling rate should be at least two times the oscillations frequency.

Since the first tangential mode contributes most to the pressure oscillation in the combustion chamber due to knocking, a sampling rate of 1250Hz for large bores, with a diameter of for example 0.92m, respectively a sampling rate of 2500Hz for medium size bores, with a diameter of for example 0.5m, is sufficient to detect knocking.

The control unit maybe configured to set the EGR rate by setting an EGR valve and/or by setting a back pressure valve and/or by setting an EGR blower.

The problem is also solved by a method for operating an internal combustion engine as described above and according to independent claims 8 and 9 comprising the following steps. A signal representative for pressure within at least one cylinder is provided. A knock index is determined on basis of the signal, in particular by determining a MAPO value or an IMPO value.

The knock index is compared with a predetermined knock index value or a knock index interval. If the determined knock index is below or above the knock index value or a knock index interval, the EGR rate, the time of an ignition event, for example the time of a pilot ignition or the time of a pilot fuel injection, and/or the amount of supplied fluid fuel are adapted.

The reduction of the knocking process may be performed in a closed loop control procedure.

The EGR rate maybe reduced or increased starting from a first EGR rate after the knocking index is determined for each of the cylinders. If the determined knock index is below or above the knock index value or the knock index interval for at least one cylinder, the ignition time is adjusted for the respective cylinder.

If more than n-2 cylinders or more than n/2 cylinders have been adjusted, the EGR rate should not be changed.

Otherwise the EGR rate maybe changed again and the knock index is determined for all of the cylinders and the ignition time may be adjusted.

The procedure stops, as soon as a predetermined number of cylinders, for example n-2 or n/2 cylinders, have been adjusted.

Alternatively, an EGR rate maybe set following a predefined set point. The knock index is determined for each of the cylinders. If the knock index is above the predetermined knock index value or the predetermined knock index interval for at least one cylinder, the ignition time is adjusted for the respective cylinder. The EGR rate is increased, if at least a predetermined number of all n cylinders, for example n-2 cylinders or n/2 cylinders, provide a signal above the knock index value or a knock index interval.

After that the knock index may be calculated for each of the cylinders. The control unit may restart monitoring the knock index after each round of adaptation.

Preferably, the method comprises the step of distinguishing an oscillating pressure wave due to a knocking event from an oscillating pressure wave due to an ignition event, for example a pilot ignition or a pilot fuel injection.

The internal combustion engine may comprise a turbocharger having a turbine and a compressor.

In the following, the invention is further explained in embodiments by means of figures. Same reference numbers refer to functionally corresponding features.

Figure 1:   shows a schematic view of an internal combustion engine;
Figure 2:   schematically shows the determination of the knock index;
Figure 3:   schematically shows oscillating pressure curves due to pilot combustion;
Figure 4:   schematically shows oscillating pressure curves due to a knocking event.

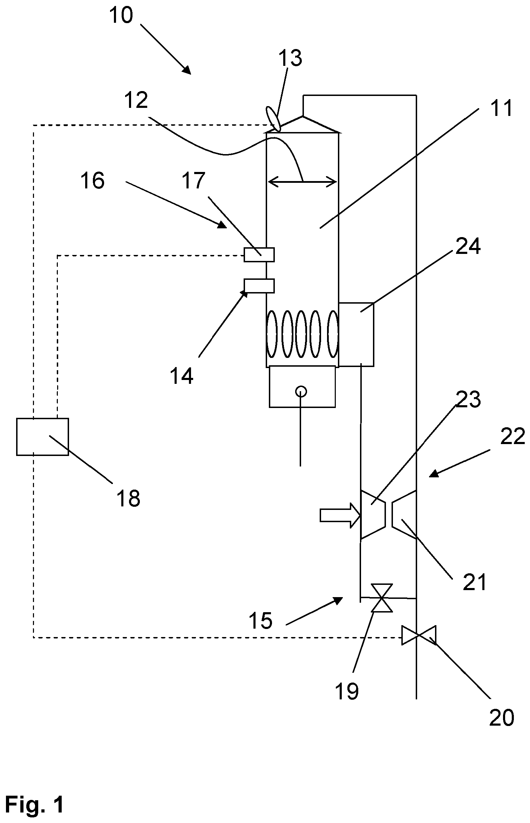

Figure 1 shows an internal combustion engine 10 which is a large vessel engine comprising a cylinder 11 having an inner diameter 12 of at least 200 mm.

The cylinder comprises a pilot injection system 13 and the cylinder comprises a gas admission valve 14.

The internal combustion engine 10 comprises a low pressure exhaust gas recirculation path 16 which is arranged such that the exhaust passes the turbine of a turbocharger 22 and is guided through the compressor 23 of the turbocharger 22 together with fresh air to a scavenging air receiver 24.

The rate of the recirculated exhaust gas (EGR rate) can be set by setting an EGR valve 19 and/or a back pressure valve 20.

The internal combustion engine 10 comprises a pressure measuring unit 16 with a sensor 17 for providing a signal representative of a pressure within the cylinder 10, for example a pressure sensor.

The internal combustion engine 10 further comprises a control unit 18 which is configured to receive the signal of the pressure measuring unit 16, which is further configured to determine a knock index on the basis of the pressure signal. The control unit 18 is configured to compare the knock index with a predetermined knock index value and/or a knock index interval. The control unit 18 is configured to adapt the EGR rate, the preignition time and/or the amount of supplied fluid fuel.

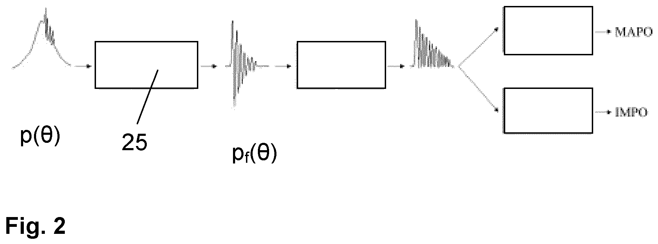

Figure 2 schematically shows the determination of the knock index. The pressure signal $p(\theta)$, wherein $\theta$ is the crank angle, is passed through a band pass filter 25 to receive the oscillating part $p_f(\theta)$ of the descending part of the pressure signal. Then, the absolute values are determined and from this the MAPO value and/or the IMPO value can be calculated.

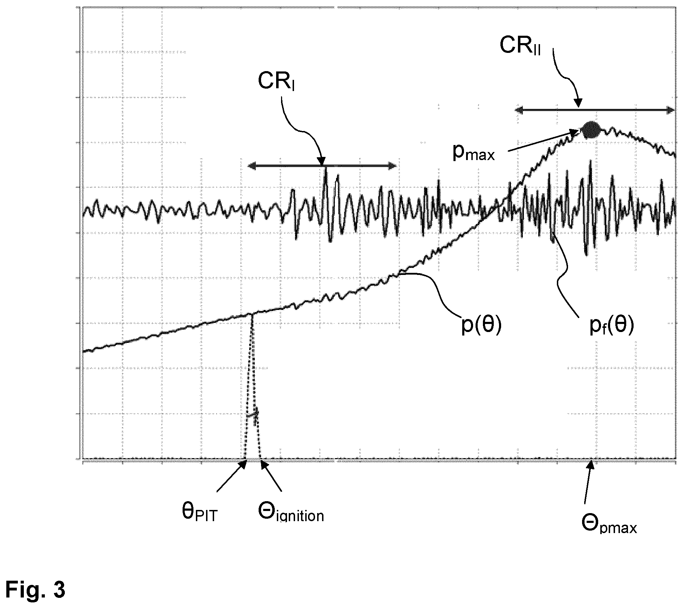

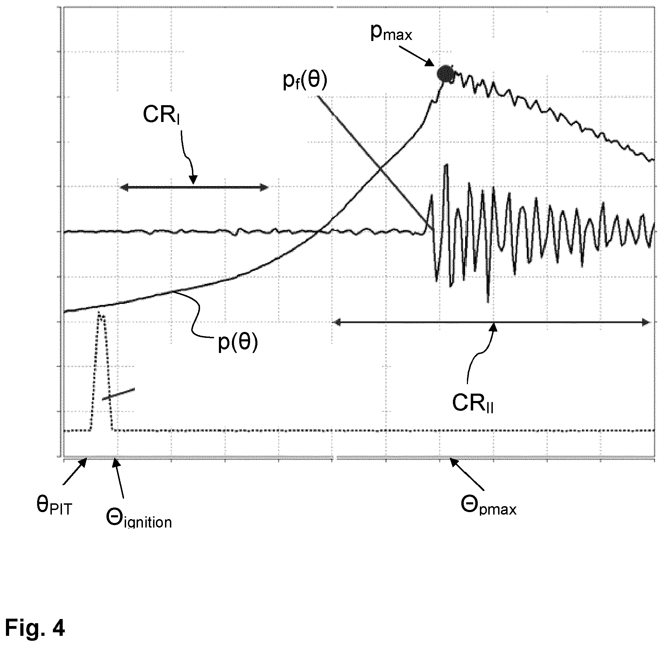

Figures 3 and 4 schematically show oscillations in pressure curves due to different reasons.

Each of the figures shows a respective pressure course $p(\theta)$ (ascending and descending part with maximal value $p_{max}$) and a band pass filtered cylinder pressure $p_f(\theta)$ over the crank angle $\theta$ for one cycle.

The band pass filtered cylinder pressure $p_f(\theta)$ is oscillating in both cases. However, the degree of the oscillation of the respective band pass filtered cylinder pressures differs for the different crank angle control ranges $CR_I$ and $CR_{II}$.

The first control range $CR_I$ covers a crank angle interval starting from the crank angle $\theta_{ignition}$ of pilot ignition which in this example is close to the crank angle $\theta_{PIT}$ of the pilot injection.

The first control range $CR_I$ may have a range of 8°CA.

The second control range $CR_{II}$ covers a crank angle interval around the crank angle $\theta_{pmax}$ of the maximal pressure value $p_{max}$ of the pressure course in the cylinder. The second control range $CR_{II}$ may have a range of 12°CA and may start at $\theta_{pmax}$-4°CA and end at $\theta_{pmax}$+8°CA.

Typically, oscillations are not considered as knocking, as shown in figure 3, if

- the maximal amplitude of the band pass filtered cylinder pressure within the first control range $CR_I$ is larger than 0.5 bar and
- if the maximal amplitude of the band pass filtered cylinder pressure within the second control range $CR_{II}$ is smaller than the maximal amplitude of the band pass filtered cylinder pressure within the first control range $CR_I$ multiplied with a factor x, wherein the factor x may be x=2.5.

Typically, oscillations occur due to a knocking event, as shown in figure 4, if

- the maximal amplitude of the band pass filtered cylinder pressure within the second control range $CR_{II}$ is larger than 2.5 bar and
- if the maximal amplitude of the band pass filtered cylinder pressure within the first control range $CR_I$ is smaller than the maximal amplitude of the band pass filtered cylinder pressure within the second control range $CR_{II}$ divided by a factor x, wherein the factor x may be x=2.5.

Hence, by identifying and comparing oscillations in respective control ranges $CR_I$ and $CR_{II}$, a knocking event can be distinguished from an oscillating pressure wave due to an ignition event.

## Claims

**1.** Internal combustion engine (10), namely a large vessel engine or a stationary engine, which is operable a least in a gas mode,

the internal combustion engine (10) comprising at least one cylinder (11) having an inner diameter (12) of at least 200mm,

the cylinder (11) comprising a pre-chamber, in particular comprising a pilot injection system (13),

the internal combustion engine (10) comprising at least one gas admission valve (14) for supplying fluid fuel to the cylinder (11);

the internal combustion engine (10) comprising a, preferably low-pressure, exhaust gas recirculation path (16)

the internal combustion engine (10) comprising a pressure measuring unit (16) with at least one sensor (17) for providing a signal representative of a pressure within the at least one cylinder (10),

the internal combustion engine (10) comprising a control unit (18) which is configured

to receive the signal of the pressure measuring unit (16), to determine a knock index on basis of the signal,

to compare the knock index with a predetermined knock index value or a knock index interval,

and to adapt the

EGR rate, the time of an ignition event, for example the time of a pilot ignition or the time of a pilot fuel injection and/or the amount of supplied fluid fuel if the determined knock index is below or above the knock index value or the knock index interval,

wherein the internal combustion engine (10) comprises a plurality of n cylinders (11), and the pressure measuring unit (16) provides signals representative for the pressure within each of the cylinders (11),

and the control unit (18) is configured to perform an adjustment procedure, wherein the control unit (18) is configured to

to set a first EGR rate,

(i) to reduce the EGR rate by a first EGR rate-step;
(ii) to determine the knock index for each of the cylinders;
(iii) if the determined knock index is below or above the knock index value or a knock index interval for at least one cylinder, to adjust the ignition time for the respective cylinder;

to keep the reduced EGR rate, if more than a predetermined number of cylinders, in particular n/2 cylinders, have been adjusted, otherwise to start again with step (i).

2. Internal combustion engine (10), namely a large vessel engine or a stationary engine, which is operable a least in a gas mode,

the internal combustion engine (10) comprising at least one cylinder (11) having an inner diameter (12) of at least 200mm,

the cylinder (11) comprising a pre-chamber, in particular comprising a pilot injection system (13),

the internal combustion engine (10) comprising at least one gas admission valve (14) for supplying fluid fuel to the cylinder (11);

the internal combustion engine (10) comprising a, preferably low-pressure, exhaust gas recirculation path (16)

the internal combustion engine (10) comprising a pressure measuring unit (16) with at least one sensor (17) for providing a signal representative of a pressure within the at least one cylinder (10),

the internal combustion engine (10) comprising a control unit (18) which is configured

to receive the signal of the pressure measuring unit (16), to determine a knock index on basis of the signal,

to compare the knock index with a predetermined knock index value or a knock index interval,

and to adapt the

EGR rate, the time of an ignition event, for example the time of a pilot ignition or the time of a pilot fuel injection and/or the amount of supplied fluid fuel if the determined knock index is below or above the knock index value or the knock index interval,

wherein the internal combustion engine (10) comprises a plurality of n cylinders (11), and the pressure measuring unit (16) provides signals representative for the pressure within each of the cylinders (11),

and the control unit (18) is configured to perform an adjustment procedure, wherein the control unit (18) is configured to

(i) to determine the knock index for each of the cylinders;
(ii) if the determined knock index is below or above the knock index value or a knock index interval for at least one cylinder, to adjust the ignition time for the respective cylinder;
(iii) to increase the EGR rate, if at least a predetermined number of cylinders, for example n/2 cylinders, have been adjusted;

in particular to start again with step (i).

3. Internal combustion engine (10) according to claim 1 or 2, wherein the control unit (18) is configured to determine the knock index by determining a MAPO value and/or an IMPO value, wherein the MAPO-value is the maximum amplitude of pressure oscillations, and the IMPO-value is the integral of the modules of pressure oscillation.

4. Internal combustion engine (10), according to one of claims 1-3, wherein the control unit (16) is configured to perform the adjustment procedure continuously after a specific time interval, in particular every 1 to 50 cycles, in particular, every 5-20 or 5-10 cycles .

5. Internal combustion engine (10), according to one of claims 1-4, wherein the control unit (16) is configured to differentiate between an oscillating pressure wave due to an ignition event, for example a pilot ignition or a pilot fuel injection, and a knocking event, in particular before determining the knock index,
by identifying and comparing oscillations in a first crank angle range ($CR_I$) close to the crank angle ($\theta_{ignition}$) of the ignition event and oscillations in a second crank angle range ($CR_{II}$) close to the crank angle ($\theta_{pmax}$) of the maximum ($p_{max}$) of the pressure course of a cycle.

6. Internal combustion engine (10), according to one of the preceding claims, wherein the control unit (16) is configured to determine a knock index on basis of the signal with a sampling rate of 1000-2500 Hz.

7. Internal combustion engine (10), according to one of the preceding claims, wherein the EGR rate is set by setting an ERG valve (19) and/or by setting a back pressure valve (20) and/or by setting an EGR blower.

8. Method for operating an internal combustion engine according to one of the preceding claims, comprising the following steps

- providing a signal representative of a pressure within the at least one cylinder (10);
- determining a knock index on basis of the signal;
- comparing the knock index with a predetermined knock index value or a knock index interval;

and adapting the EGR rate, the time of an ignition event, for example the time of a pilot ignition or the time of a pilot fuel injection, and/or the amount of supplied fluid fuel, if the determined knock index is below or above the knock index value or a knock index interval,
comprising the steps of
setting a first EGR rate,

(a) reducing the EGR rate by a first EGR rate-step;
(b) determining the knock index for each of the cylinders;
(c) if the determined knock index is below or above the knock index value or a knock index interval for at least one cylinder, adjusting the pilot ignition time for the respective cylinder;

- (d) keeping the reduced EGR rate, if more than n/2 cylinders have been adjusted, otherwise starting again with step (a).

9. Method for operating an internal combustion engine according to one of the preceding claims, comprising the following steps

- providing a signal representative of a pressure within the at least one cylinder (10);
- determining a knock index on basis of the signal;
- comparing the knock index with a predetermined knock index value or a knock index interval;

and adapting the EGR rate, the time of an ignition event, for example the time of a pilot ignition or the time of a pilot fuel injection, and/or the amount of supplied fluid fuel, if the determined knock index is below or above the knock index value or a knock index interval, comprising the steps of

(a) determining the knock index for each of the cylinders;
(b) if the determined knock index is below or above the knock index value or a knock index interval for at least one cylinder, adjusting the pilot ignition time for the respective cylinder;

(c) increasing the EGR rate, if at least a predetermined number of cylinders, for example n/2 cylinders, have been adjusted;

(d) in particular starting again with step (a).

10. Method according to claim 8 or 9, wherein the knock index is determined on basis of the signal with a sampling rate of 1000-2500 Hz.

11. Method according to one of claims 8 to 10, comprising the steps of

distinguishing an oscillating pressure wave due to a knocking event from an oscillating pressure wave due to an ignition event, for example a pilot ignition or a pilot fuel injection, in particular before determining the knock index, in particular by identifying and comparing oscillations in a first crank angle range ($CR_I$) close to the crank angle ($\theta_{ignition}$) of the ignition event and oscillations in a second crank angle range ($CR_{II}$) close to the crank angle ($\theta_{p-max}$) of the maximum ($p_{max}$) of the pressure course of a cycle.

## Patentansprüche

1. Verbrennungsmotor (10), nämlich ein Schiffsgroßmotor oder ein stationärer Motor, der zumindest in einem Gasbetrieb betrieben werden kann, wobei der Verbrennungsmotor (10) mindestens einen Zylinder (11) mit einem Innendurchmesser (12) von mindestens 200 mm umfasst,

wobei der Zylinder (11) eine Vorkammer umfasst, insbesondere ein Vorinjektionssystem (13),
wobei der Verbrennungsmotor (10) mindestens ein Gaseinlassventil (14) zum Zuführen von fluidem Kraftstoff zum Zylinder (11) umfasst;
wobei der Verbrennungsmotor (10) einen Abgasrückführpfad (16), vorzugsweise einen Niederdruck-Abgasrückführpfad (16), umfasst,
wobei der Verbrennungsmotor (10) eine Druckmesseinheit (16) mit mindestens einem Sensor (17) umfasst, um ein Signal bereitzustellen, das einen Druck innerhalb des mindestens einen Zylinders (10) repräsentiert,
wobei der Verbrennungsmotor (10) eine Steuereinheit (18) umfasst, die so konfiguriert ist, dass sie
das Signal der Druckmesseinheit (16) empfängt,
auf der Grundlage des Signals einen Klopfindex bestimmt, den Klopfindex mit einem vorgegebenen Klopfindexwert oder einem Klopfindexintervall vergleicht
und die EGR-Rate, den Zeitpunkt eines Zündereignisses, beispielsweise den Zeitpunkt einer Vorzündung oder den Zeitpunkt einer Vor-Kraftstoffeinspritzung, und/oder die Menge des zugeführten fluiden Kraftstoffs anzupassen, wenn der ermittelte Klopfindex unterhalb oder oberhalb des Klopfindexwertes oder des Klopfindexintervalls liegt,
wobei der Verbrennungsmotor (10) eine Mehrzahl von n Zylindern (11) umfasst,
und die Druckmesseinheit (16) Signale liefert, die für den Druck in jedem der Zylinder (11) repräsentativ sind,
und die Steuereinheit (18) so konfiguriert ist, dass sie einen Einstellvorgang durchführt, wobei die Steuereinheit (18) so konfiguriert ist, dass
sie eine erste EGR-Rate einstellt,

(i) die EGR-Rate um einen ersten EGR-Ratenschritt reduziert;
(ii) den Klopfindex für jeden der Zylinder zu bestimmen;
(iii) wenn der bestimmte Klopfindex unter oder über dem Klopfindexwert oder einem Klopfindexintervall für mindestens einen Zylinder liegt, den Zündzeitpunkt für den jeweiligen Zylinder anzupassen;

die reduzierte EGR-Rate beizubehalten, wenn mehr als eine vorbestimmte Anzahl von Zylindern, insbesondere n/2 Zylinder, angepasst wurden, andernfalls erneut mit Schritt (i) zu beginnen.

2. Verbrennungsmotor (10), nämlich ein Schiffsgroßmotor oder ein stationärer Motor, der zumindest in einem Gasmodus betreibbar ist, wobei der Verbrennungsmotor (10) mindestens einen Zylinder (11) mit einem Innendurchmesser (12) von mindestens 200 mm umfasst,

wobei der Zylinder (11) eine Vorkammer umfasst, insbesondere ein Vorinjektionssystem (13) umfasst,
wobei der Verbrennungsmotor (10) mindestens ein Gaseinlassventil (14) zum Zuführen von fluidem Kraftstoff zum Zylinder (11) umfasst;
wobei der Verbrennungsmotor (10) einen Abgasrückführpfad (16), vorzugsweise einen Niederdruck-Abgasrückführpfad (16), umfasst,

wobei der Verbrennungsmotor (10) eine Druckmesseinheit (16) mit mindestens einem Sensor (17) umfasst, um ein Signal bereitzustellen, das für einen Druck innerhalb des mindestens einen Zylinders (10) repräsentativ ist,

wobei der Verbrennungsmotor (10) eine Steuereinheit (18) umfasst, die so konfiguriert ist,

dass sie das Signal der Druckmesseinheit (16) empfängt,

auf der Grundlage des Signals einen Klopfindex bestimmt, den Klopfindex mit einem vorgegebenen Klopfindexwert oder einem Klopfindexintervall vergleicht

und die

EGR-Rate, den Zeitpunkt eines Zündereignisses, beispielsweise den Zeitpunkt einer Vorzündung oder den Zeitpunkt einer Vor-Kraftstoffeinspritzung, und/oder die Menge des zugeführten fluid-Kraftstoffs anzupassen, wenn der ermittelte Klopfindex unterhalb oder oberhalb des Klopfindexwertes oder des Klopfindexintervalls liegt,

wobei der Verbrennungsmotor (10) mehrere n Zylinder (11) umfasst, und die Druckmesseinheit (16) Signale liefert, die für den Druck in jedem der Zylinder (11) repräsentativ sind,

und die Steuereinheit (18) so konfiguriert ist, dass sie einen Anpassungsvorgang durchführt, wobei die Steuereinheit (18) so konfiguriert ist, dass

(i) sie den Klopfindex für jeden der Zylinder bestimmt;

(ii) wenn der ermittelte Klopfindex für mindestens einen Zylinder unterhalb oder oberhalb des Klopfindexwerts oder eines Klopfindexintervalls liegt, den Zündzeitpunkt für den jeweiligen Zylinder anzupassen;

(iii) die EGR-Rate zu erhöhen, wenn mindestens eine vorbestimmte Anzahl von Zylindern, beispielsweise n/2 Zylinder, angepasst worden sind;

insbesondere erneut mit Schritt (i) zu beginnen.

3. Verbrennungsmotor (10) nach Anspruch 1 oder 2, wobei die Steuereinheit (18) so konfiguriert ist, dass sie den Klopfindex durch Bestimmen eines MAPO-Werts und/oder eines IMPO-Werts bestimmt, wobei der MAPO-Wert die maximale Amplitude der Druckschwingungen und der IMPO-Wert das Integral der Druckschwingungsmodule ist.

4. Verbrennungsmotor (10) nach einem der Ansprüche 1-3, wobei die Steuereinheit (16) so konfiguriert ist, dass sie den Anpassungsvorgang nach einem bestimmten Zeitintervall, insbesondere alle 1 bis 50 Zyklen, insbesondere alle 5-20 oder 5-10 Zyklen, kontinuierlich durchführt.

5. Verbrennungsmotor (10) nach einem der Ansprüche 1-4, wobei die Steuereinheit (16) so konfiguriert ist, dass sie zwischen einer oszillierenden Druckwelle aufgrund eines Zündereignisses, beispielsweise einer Vorzündung oder einer Vor-Kraftstoffeinspritzung, und einem Klopfereignis unterscheidet, insbesondere vor der Bestimmung des Klopfindex, indem sie Schwingungen in einem ersten Kurbelwinkelbereich ($CR_I$) nahe dem Kurbelwinkel ($\theta_{Zündung}$) des Zündereignisses und Schwingungen in einem zweiten Kurbelwinkelbereich ($CR_{II}$) nahe dem Kurbelwinkel ($\theta_{pmax}$) des Maximums ($p_{max}$) des Druckverlaufs eines Zyklus identifiziert und vergleicht.

6. Verbrennungsmotor (10) nach einem der vorstehenden Ansprüche, wobei die Steuereinheit (16) so konfiguriert ist, dass sie einen Klopfindex auf der Grundlage des Signals mit einer Abtastrate von 1000-2500 Hz bestimmt.

7. Verbrennungsmotor (10) nach einem der vorstehenden Ansprüche, wobei die EGR-Rate durch Einstellen eines EGR-Ventils (19) und/oder durch Einstellen eines Gegendruckventils (20) und/oder durch Einstellen eines EGR-Gebläses eingestellt wird.

8. Verfahren zum Betreiben eines Verbrennungsmotors gemäß einem der vorstehenden Ansprüche, mit den folgenden Schritten

- Bereitstellen eines Signals, das einen Druck innerhalb des mindestens einen Zylinders (10) repräsentiert;
- Bestimmen eines Klopfindex auf der Grundlage des Signals;
- Vergleichen des Klopfindex mit einem vorbestimmten Klopfindexwert oder einem Klopfindexintervall;

und Anpassen der EGR-Rate, des Zeitpunkts eines Zündereignisses, beispielsweise des Zeitpunkts einer Vorzündung oder des Zeitpunkts einer Vor-Kraftstoffeinspritzung, und/oder der Menge des zugeführten fluiden Kraftstoffs, wenn der ermittelte Klopfindex unterhalb oder oberhalb des Klopfindexwerts oder eines Klopfindexintervalls liegt, mit den Schritten:

Einstellen einer ersten EGR-Rate,

(a) Verringern der EGR-Rate um einen ersten EGR-Ratenschritt;
(b) Bestimmen des Klopfindex für jeden der Zylinder;
(c) wenn der ermittelte Klopfindex für mindestens einen Zylinder unterhalb oder oberhalb des Klopfindexwertes oder eines Klopfindexintervalls liegt, Anpassen des Vorzündungszeitpunkts für den jeweiligen Zylinder;

- (d) Beibehalten der reduzierten EGR-Rate, wenn mehr als n/2 Zylinder angepasst wurden, andernfalls erneutes Beginnen mit Schritt (a).

9. Verfahren zum Betreiben eines Verbrennungsmotors gemäß einem der vorstehenden Ansprüche, mit den folgenden Schritten

- Bereitstellen eines Signals, das einen Druck innerhalb des mindestens einen Zylinders (10) repräsentiert;
- Bestimmen eines Klopfindex auf der Grundlage des Signals;
- Vergleichen des Klopfindex mit einem vorbestimmten Klopfindexwert oder einem Klopfindexintervall;

und Anpassen der EGR-Rate, des Zeitpunkts eines Zündereignisses, beispielsweise des Zeitpunkts einer Vorzündung oder des Zeitpunkts einer Vor-Kraftstoffeinspritzung, und/oder der Menge des zugeführten fluiden Kraftstoffs, wenn der ermittelte Klopfindex unterhalb oder oberhalb des Klopfindexwerts oder eines Klopfindexintervalls liegt, mit den folgenden Schritten

(a) Ermitteln des Klopfindex für jeden der Zylinder;
(b) wenn der ermittelte Klopfindex für mindestens einen Zylinder unterhalb oder oberhalb des Klopfindexwertes oder eines Klopfindexintervalls liegt, Einstellen des Vorzündungszeitpunkts für den jeweiligen Zylinder;
(c) Erhöhen der EGR-Rate, wenn mindestens eine vorbestimmte Anzahl von Zylindern, beispielsweise n/2 Zylinder, eingestellt worden sind;
(d) insbesondere erneutes Beginnen mit Schritt (a).

10. Verfahren nach Anspruch 8 oder 9, wobei der Klopfindex auf der Grundlage des Signals mit einer Abtastrate von 1000-2500 Hz bestimmt wird.

11. Verfahren nach einem der Ansprüche 8 bis 10, umfassend die Schritte Unterscheiden einer oszillierenden Druckwelle aufgrund eines Klopfereignisses von einer oszillierenden Druckwelle aufgrund eines Zündereignisses, beispielsweise einer Vorzündung oder einer Vor-Kraftstoffeinspritzung, insbesondere vor der Bestimmung des Klopfindex, insbesondere durch Identifizieren und Vergleichen von Schwingungen in einem ersten Kurbelwinkelbereich ($CR_I$) nahe dem Kurbelwinkel ($\theta_{Zündung}$) des Zündereignisses und Schwingungen in einem zweiten Kurbelwinkelbereich ($CR_{II}$) nahe dem Kurbelwinkel ($\theta_{pmax}$) des Maximums ($p_{max}$) des Druckverlaufs eines Zyklus.

**Revendications**

1. Moteur à combustion interne (10), à savoir un moteur pour grand navire ou un moteur stationnaire, apte à fonctionner au moins en mode gaz,

le moteur à combustion interne (10) comprenant au moins un cylindre (11) ayant un diamètre intérieur (12) d'au moins 200 mm,
le cylindre (11) comprenant une préchambre, comprenant en particulier un système d'injection pilote (13),
le moteur à combustion interne (10) comprenant au moins une soupape d'admission de gaz (14) pour alimenter ledit au moins un cylindre (11) en fluide combustible ;
le moteur à combustion interne (10) comprenant un circuit de recirculation des gaz d'échappement (16), de préférence à basse pression,
le moteur à combustion interne (10) comprenant une unité de mesure de pression (16) avec au moins un capteur (17) pour fournir un signal représentatif d'une pression à l'intérieur dudit au moins un cylindre (10),
le moteur à combustion interne (10) comprenant une unité de commande (18) configurée
pour recevoir le signal de l'unité de mesure de pression (16),
pour déterminer un indice de cliquetis sur la base du signal,

pour comparer l'indice de cliquetis à une valeur prédéterminée d'indice de cliquetis ou à un intervalle d'indice de cliquetis,

et pour adapter le taux de recirculation des gaz d'échappement (taux EGR), l'instant d'un événement d'allumage, par exemple l'instant d'un allumage pilote ou l'instant d'injection de combustible pilote et/ou la quantité de fluide combustible fournie si l'indice de cliquetis déterminé est inférieur ou supérieur à ladite valeur prédéterminée d'indice de cliquetis ou audit intervalle d'indice de cliquetis,

dans lequel le moteur à combustion interne (10) comprend une pluralité de n cylindres (11), et l'unité de mesure de pression (16) fournit des signaux représentatifs de la pression à l'intérieur de chacun des cylindres (11),

et l'unité de commande (18) est configurée pour effectuer une procédure de réglage, dans laquelle l'unité de commande (18) est configurée

pour définir un premier taux EGR,

(i) pour réduire le taux EGR d'un premier incrément de taux EGR ;

(ii) pour déterminer l'indice de cliquetis pour chacun des cylindres ;

(iii) si l'indice de cliquetis déterminé pour au moins un cylindre est inférieur ou supérieur à la valeur prédéterminée d'indice de cliquetis ou à l'intervalle d'indice de cliquetis, pour ajuster l'instant d'allumage pour le cylindre correspondant ;

pour maintenir le taux EGR réduit, si plus d'un nombre prédéterminé de cylindres, en particulier n/2 cylindres, ont été ajustés, sinon pour recommencer avec l'étape (i).

2. Moteur à combustion interne (10), à savoir un moteur pour grand navire ou un moteur stationnaire, apte à fonctionner au moins en mode gaz,

le moteur à combustion interne (10) comprenant au moins un cylindre (11) ayant un diamètre intérieur (12) d'au moins 200 mm,

le cylindre (11) comprenant une préchambre, comprenant en particulier un système d'injection pilote (13),

le moteur à combustion interne (10) comprenant au moins une soupape d'admission de gaz (14) pour alimenter le cylindre (11) en fluide combustible ;

le moteur à combustion interne (10) comprenant un circuit de recirculation des gaz d'échappement (16), de préférence à basse pression,

le moteur à combustion interne (10) comprenant une unité de mesure de pression (16) avec au moins un capteur (17) pour fournir un signal représentatif d'une pression à l'intérieur d'au moins un cylindre (10),

le moteur à combustion interne (10) comprenant une unité de commande (18) qui est configurée

pour recevoir le signal de l'unité de mesure de pression (16),

pour déterminer un indice de cliquetis sur la base du signal,

pour comparer l'indice de cliquetis à une valeur prédéterminée d'indice de cliquetis ou à un intervalle d'indice de cliquetis,

et pour adapter le taux EGR, l'instant d'un événement d'allumage, par exemple l'instant d'un allumage pilote ou l'instant d'une injection de combustible pilote et/ou la quantité de fluide combustible fournie si l'indice de cliquetis déterminé est inférieur ou supérieur à la valeur prédéterminée d'indice de cliquetis ou à l'intervalle d'indice de cliquetis,

dans lequel le moteur à combustion interne (10) comprend une pluralité de n cylindres (11), et l'unité de mesure de pression (16) fournit des signaux représentatifs de la pression à l'intérieur de chacun des cylindres (11),

et l'unité de commande (18) est configurée pour réaliser une procédure de réglage, dans laquelle l'unité de commande (18) est configurée

(i) pour déterminer l'indice de cliquetis pour chacun des cylindres ;

(ii) si l'indice de cliquetis déterminé pour au moins un cylindre est inférieur ou supérieur à la valeur prédéterminée d'indice de cliquetis ou à un intervalle d'indice de cliquetis, pour ajuster le temps d'allumage pour le cylindre correspondant ;

(iii) pour augmenter le taux EGR, si au moins un nombre prédéterminé de cylindres, par exemple n/2 cylindres, ont été ajustés ;

en particulier, pour recommencer à l'étape (i).

3. Moteur à combustion interne (10) selon l'une quelconque des revendications 1 ou 2, dans lequel l'unité de commande (18) est configurée pour déterminer l'indice de cliquetis en déterminant une valeur MAPO et/ou une valeur IMPO, la valeur MAPO étant l'amplitude maximale des oscillations de pression et la valeur IMPO étant l'intégrale des modules d'oscillation de pression.

**4.** Moteur à combustion interne (10) selon l'une quelconque des revendications 1 à 3, dans lequel l'unité de commande (16) est configurée pour effectuer la procédure de réglage de manière continue après un intervalle de temps spécifique, en particulier tous les 1 à 50 cycles, notamment tous les 5 à 20 ou 5 à 10 cycles.

**5.** Moteur à combustion interne (10) selon l'une quelconque des revendications 1 à 4, dans lequel l'unité de commande (16) est configurée pour différencier une onde de pression oscillante due à un événement d'allumage, par exemple un allumage pilote ou une injection de combustible pilote, et un phénomène de cliquetis, en particulier avant de déterminer l'indice de cliquetis,
en identifiant et en comparant les oscillations dans une première plage d'angle de vilebrequin ($CR_I$) proche de l'angle de vilebrequin ($\theta_{ignition}$) de l'événement d'allumage et les oscillations dans une deuxième plage d'angle de vilebrequin ($CR_{II}$) proche de l'angle de vilebrequin ($\theta_{pmax}$) du maximum ($p_{max}$) de l'évolution de la pression sur un cycle.

**6.** Moteur à combustion interne (10), selon l'une quelconque des revendications précédentes, dans lequel l'unité de commande (16) est configurée pour déterminer un indice de cliquetis sur la base du signal avec une fréquence d'échantillonnage de 1000 à 2500 Hz.

**7.** Moteur à combustion interne (10) selon l'une quelconque des revendications précédentes, dans lequel le taux EGR est réglé par réglage d'une soupape RGE (19) et/ou par réglage d'une soupape de contre-pression (20) et/ou par réglage d'un ventilateur EGR.

**8.** Procédé de fonctionnement d'un moteur à combustion interne selon l'une des revendications précédentes, comprenant les étapes suivantes

- fournir un signal représentatif d'une pression à l'intérieur dudit au moins un cylindre (10) ;
- déterminer un indice de cliquetis sur la base du signal ;
- comparer l'indice de cliquetis à une valeur prédéterminée d'indice de cliquetis ou à un intervalle d'indice de cliquetis ;

et adapter le taux EGR, l'instant d'un événement d'allumage, par exemple l'instant d'un allumage pilote ou l'instant d'une injection de combustible pilote, et/ou la quantité de fluide combustible fournie, si l'indice de cliquetis déterminé est inférieur ou supérieur à la valeur prédéterminée d'indice de cliquetis ou à un intervalle d'indice de cliquetis,
le procédé comprenant en outre les étapes consistant à définir un premier taux EGR,

(a) réduire le taux d'EGR d'un premier incrément de taux d'EGR ;
(b) déterminer l'indice de cliquetis pour chacun des cylindres ;
(c) si l'indice de cliquetis déterminé pour au moins un cylindre est inférieur ou supérieur à la valeur prédéterminée d'indice de cliquetis ou à un intervalle d'indice de cliquetis, ajuster l'instant d'allumage pilote pour le cylindre correspondant ;

- (d) maintenir le taux EGR réduit, si plus de n/2 cylindres ont été ajustés, sinon recommencer à l'étape (a).

**9.** Procédé de fonctionnement d'un moteur à combustion interne selon l'une quelconque des revendications précédentes, comprenant les étapes suivantes

- fournir un signal représentatif d'une pression dudit au moins un cylindre (10) ;
- déterminer un indice de cliquetis sur la base du signal ;
- comparer l'indice de cliquetis à une valeur prédéterminée d'indice de cliquetis ou à un intervalle d'indice de cliquetis ;

et adapter le taux d'EGR, l'instant d'un événement d'allumage, par exemple l'instant d'un allumage pilote ou l'instant d'une injection de combustible pilote, et/ou la quantité de fluide combustible fournie, si l'indice de cliquetis déterminé est inférieur ou supérieur à la valeur prédéterminée d'indice de cliquetis ou à un intervalle d'indice de cliquetis,
le procédé comprenant en outre les étapes consistant à

(a) déterminer l'indice de cliquetis pour chacun des cylindres ;

(b) si l'indice de cliquetis déterminé pour au moins un cylindre est inférieur ou supérieur à la valeur prédéterminée d'indice de cliquetis ou à un intervalle d'indice de cliquetis, ajuster l'instant de l'allumage pilote pour le cylindre correspondant ;

(c) augmenter le taux EGR, si au moins un nombre prédéterminé de cylindres, par exemple n/2 cylindres, ont été ajustés ;

(d) en particulier, recommencer à l'étape (a).

10. Procédé selon la revendication 8 ou 9, dans lequel l'indice de cliquetis est déterminé sur la base du signal avec une fréquence d'échantillonnage de 1000 à 2500 Hz.

11. Procédé selon l'une quelconque des revendications 8 à 10, comprenant les étapes consistant à
distinguer une onde de pression oscillante due à un phénomène de cliquetis d'une onde de pression oscillante due à un événement d'allumage, par exemple un allumage pilote ou une injection de combustible pilote, en particulier avant de déterminer l'indice de cliquetis, en particulier en identifiant et en comparant les oscillations dans une première plage d'angle de vilebrequin ($CR_I$) proche de l'angle de vilebrequin ($\theta_{ignition}$) de l'événement d'allumage et les oscillations dans une deuxième plage d'angle de vilebrequin ($CR_{II}$) proche de l'angle de vilebrequin ($\theta_{pmax}$) du maximum ($p_{max}$) de l'évolution de la pression sur cycle.

**Fig. 1**

$p(\theta)$        25        $p_f(\theta)$

MAPO

IMPO

**Fig. 2**

**Fig. 3**

**Fig. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017074184 A1

**Non-patent literature cited in the description**

- A new knock event definition for knock detection and control optimization. **BARES P et al.** APPLIED THERMAL ENGINEERING.. PERGAMON, 22 December 2017, vol. 131, 80-88